# EUROPEAN PATENT APPLICATION

(11) **EP 4 729 193 A1**
(43) Date of publication of application: **22.04.2026**
(21) Application number: 25159056.8
(22) Date of filing: 20.02.2025
(51) Int. Cl.: B08B 3/02, G03B 17/08, G03B 17/56, B08B 13/00

(54) **EXPLOSION-PROOF WATER TANK DEVICE**

(30) Priority: 16.10.2024 TW 113139429
(71) Applicant: Liao, Kuo-Hsun, New Taipei City, 23850 (TW)
(72) Inventor: Chen, Po-Wei, 23850 New Taipei City (TW)
(74) Representative: Stevens Hewlett & Perkins

(57) **Abstract**

Provided is an explosion-proof water tank device, including a base, a circuit control unit, a water tank body, and an explosion-proof shield; wherein the circuit control unit and the water tank body are installed on the base. A water pump installed inside the water tank body is connected to an electrical conduit and a water outlet pipe, both extending outside the water tank body. The electrical conduit is connected to the circuit control unit, and the water outlet pipe is connected to the water outlet of the base. The explosion-proof shield is combined with the base to completely enclose the circuit control unit, the water tank body, the electrical conduit, and the water outlet pipe. Accordingly, the present invention can prevent explosions caused by sparks that may be generated during the operation of the circuit control unit when used in highly hazardous environments where open flames are strictly prohibited.

## Description

### CROSS-REFERENCE TO RELATED APPLICATION

This application claims the priority of Taiwanese patent application No. 113139429, filed on October 16, 2024, which is incorporated herewith by reference.

### BACKGROUND OF THE INVENTION

### 1. Field of the Invention

The present invention generally relates to an explosion-proof water tank device used in highly dangerous working environments, such as chemical plants, oil drilling platforms, refineries, etc., and particularly provides an explosion-proof water tank connected to an explosion-proof camera for cleaning the surface of the camera lens.

### 2. The Prior Arts

Based on various reasons such as recording the real situation, preventing crime, collecting evidence, etc., it is a common practice to install cameras in various places such as residential communities, streets, factories, offices, airports, etc. Wherein, in highly dangerous working environments such as chemical plants, oil drilling platforms, refineries, etc., each country requires the installation of cameras that meet special specifications for safety monitoring. The special specification requirement means that in an environment where a powerful explosion occurs, the camera must have sufficient withstand strength without being damaged. Otherwise, once the camera is damaged by the external force of the explosion, it will not be able to record the scene of the accident in detail, which will also make judgments difficult for determining the cause of the accident.

The aforementioned special specifications of the camera are called "explosion-proof cameras", whose structure is to install the photography equipment in a thick metal casing. The front end of the casing is provided with tempered glass. The lens of the camera faces the tempered glass and can shoot the outside from the casing. The thick metal casing prevents the strong external force of the explosion from damaging the photography equipment inside the casing.

After the camera is used for a period of time, the lens will be polluted due to the weather and environment, affecting the quality and effect of the acquired images, especially in unfriendly environments, such as chemical factories, oil drilling platforms, and refineries. Therefore, the glass surface of the camera lens needs to be cleaned regularly.

Due to the vast scope of the environments, such as factories, airports, etc., a large number of explosion-proof cameras need to be deployed, therefore, it is time-consuming and laborious to manually clean individual camera lenses. In order to solve the problem, a known solution is to configure a set of water tank devices in each group of explosion-proof cameras. The water tank device automatically supplies water or cleaning fluid to the glass surface of the camera lens, and then the wipers disposed at the cameras scrub the glass surface of the lens.

In order to comply with the explosion-proof requirements of highly sensitive operation environments, the water tank device must also have an explosion-proof function. To prevent the water tank device from becoming the ignition point of the explosion, it is a common practice to avoid using electrical equipment in the water tank device to prevent the electrical equipment from generating sparks during use and causing an explosion. To this end, it is conventional to use pneumatic equipment to pressurize the water or cleaning fluid in the water tank body to supply it to the explosion-proof cameras; that is, each group of explosion-proof cameras is equipped with a set of water tank devices equipped with pneumatic equipment, and the staff inject high-pressure gas into the water tank body in advance, and by controlling the timer and valve, the water or cleaning fluid in the water tank device is automatically sprayed onto the glass surface of the camera lens at regular intervals, and then the wiper disposed on the camera is used to clean the glass surface of the lens.

Although the aforementioned pneumatic water tank device has the advantage of being explosion-proof, its disadvantage is that the gas pressure in the water tank body will be reduced after a certain number of spray cleanings. In addition, even if it is not in use, there will still be the problem of slow gas leakage. As a result, the distance and amount of water or cleaning fluid sprayed to the glass surface of the lens using air pressure become insufficient. Therefore, staff still have to spend efforts and time circulating and replenishing high-pressure gas in the vast factory/field area, which is inefficient.

### SUMMARY OF THE INVENTION

A primary objective of the present invention is to provide an explosion-proof water tank device that can supply water or cleaning fluid to the glass surface of the lens of an explosion-proof camera more efficiently and durably, and has an explosion-proof function.

The explosion-proof water tank device provided by the present invention includes: a base; a circuit control unit, disposed on the base; a water tank body, disposed on the base; and a water pump, disposed inside the water tank body, connected to an electrical conduit and a water outlet pipe, and extending out of the water tank body, wherein the electrical conduit is connected to the circuit control unit, and the water outlet pipe is connected to a water outlet of the base; and an explosion-proof shield, connected to the water outlet of the base, combined with the base to completely enclose the circuit control unit, the water tank body, the electrical conduit, and the water outlet pipe; wherein the water outlet of the base is connected to a water pipe, and the water pump pumps the water or cleaning fluid stored in the water tank body to deliver to an explosion-proof camera and spray onto a lens surface of the explosion-proof camera.

Preferably, the explosion-proof water tank device of the present invention further includes: an electronic buoy, disposed in the water tank body, connected to a buoy conduit and extending out of the water tank body, and the buoy conduit being connected to the circuit control unit; wherein the buoy conduit is completely enclosed by the base and the explosion-proof shield.

In a preferred embodiment of the present invention, the base has a bottom seat, one side of the bottom seat is connected to a vertical plate, the opposite sides of the bottom seat and the vertical plate are connected to side plates, respectively, and the outlet water is disposed on the side plate.

In a preferred embodiment of the present invention, the water tank body is made of metal or plastic.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a schematic perspective view showing the appearance of the explosion-proof water tank device of the present invention;
FIG. 2 is a perspective exploded view showing the assembly relationship of the components of the explosion-proof water tank device of the present invention;
FIG. 3 is a front planar cross-sectional view showing the structure of the explosion-proof water tank device of the present invention;
FIG. 4 is a side planar cross-sectional view showing the structure of the explosion-proof water tank device of the present invention; and
FIG. 5 is a top planar cross-sectional view showing the structure of the explosion-proof water tank device of the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

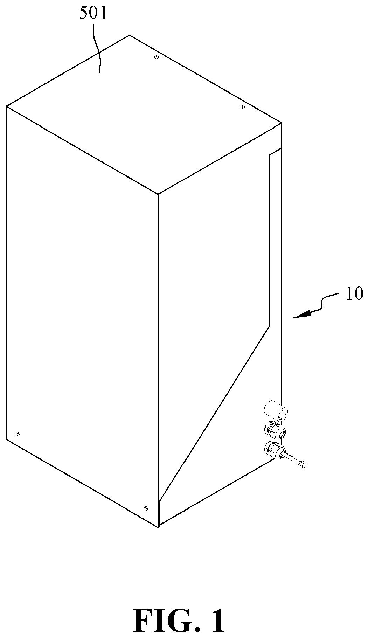

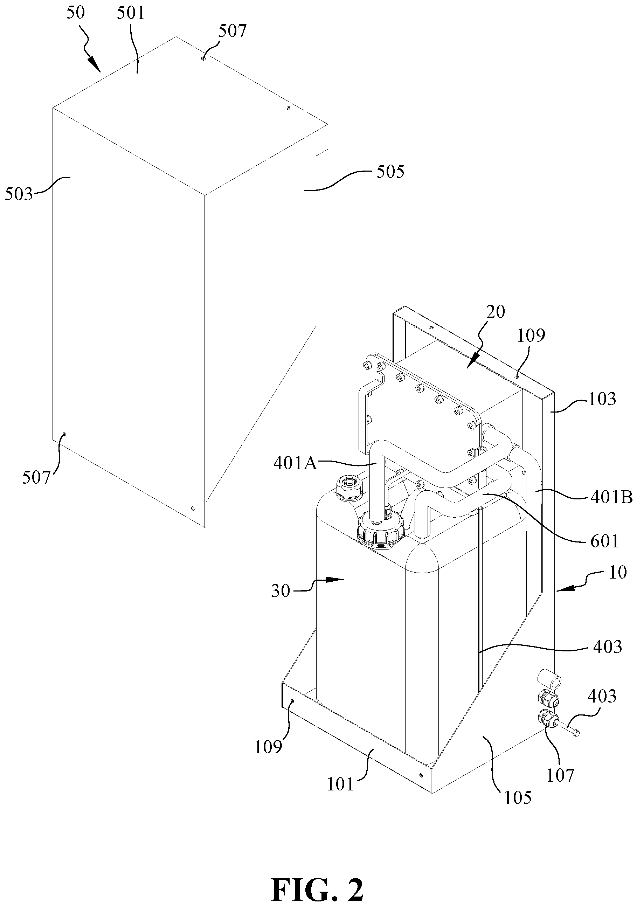

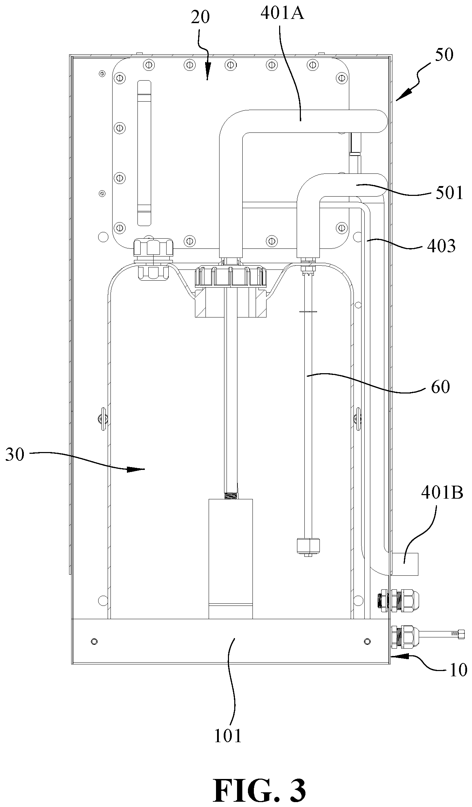

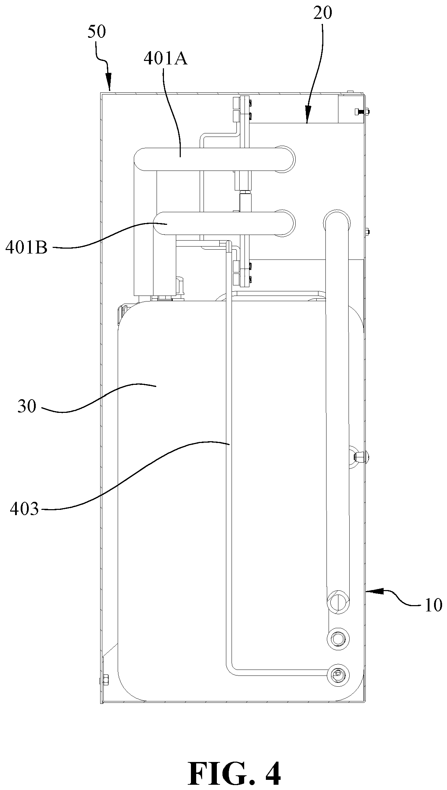

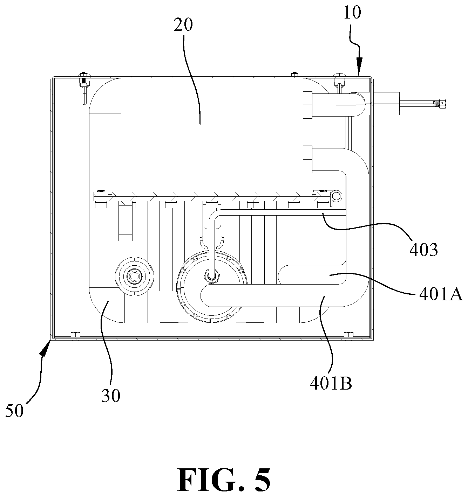

As shown in FIGS. 1 to 5, the explosion-proof water tank device provided by the present invention is to be connected to an explosion-proof camera for cleaning the surface of the camera lens. The preferred embodiment includes: a base 10, a circuit control unit 20, a water tank body 30, a water pump 40, an explosion-proof shield 50, and an electronic buoy 60. Wherein, the base 10 can be formed by bending a metal plate to have a base 101 and a vertical plate 103 connected to one side (i.e., the rear side) of the base 101. The two opposite sides of the base 101 and the vertical plate 103 are connected to side plate 105, respectively. Accordingly, a storage space is formed between the base 101, the vertical plate 103 and the two side plates 105; the side plate 105 on one side is provided with a water outlet 107 near the bottom; the vertical plate 103 is disposed with a plurality of screw holes 109 on the top and the front (i.e., the front side) of the base 101.

The circuit control unit 20 is located on the base 10, preferably fixed at a position near the upper end of the vertical plate 103. The circuit control unit 20 is an electrical device used to control the operation of the water pump 40 and the electronic buoy 60.

The water tank body 30 is located on the base 10, and is preferably made of metal or plastic material and fixed on the base 101; the interior of the water tank body 30 is a space for holding water or cleaning fluid, and its upper end is disposed with water supply holes and a plurality of holes for passing pipes (not labeled).

The water pump 40 is located inside the water tank body 30. The water pump 40 is connected to the first electrical conduit 401A and extends upward out of the water tank body 30. The first electrical conduit 401A is then connected to the circuit control unit 20. In addition, a second electrical conduit 401B is provided in the circuit control unit 20 and extends out of the side plate 105 on one side of the base 10; wherein, the first electrical conduit 401A is internally arranged with wires electrically connected to the water pump 40 and the circuit control unit 20. The second electrical conduit 401B is internally arranged with wires electrically connected to the circuit control unit 20 and the external power supply, and the first electrical conduit 401A and the second electrical conduit 401B provide the functions of waterproofing and preventing external damage to the wires. In addition, a water outlet pipe 403 is connected between the water pump 40 and the water outlet 107 of the base 10, and the water outlet 107 is connected to a water delivery pipe (not shown in the figure). When the water pump 40 is running, the water or the cleaning fluid in the water tank body 30 is extracted and transported to the explosion-proof camera (not shown in the figure) through the water outlet pipe 403 and the water delivery pipe, and the water or cleaning fluid is sprayed onto the lens surface of the explosion-proof camera through a nozzle.

Preferably, an electronic buoy 60 can also be provided inside the water tank body 30 to detect the stored water level. The electronic buoy 60 is connected to the buoy conduit 601 and extends out of the water tank body 30, and the buoy conduit 601 is connected to the circuit control unit 20. The buoy conduit 601 provides the functions of waterproofing and preventing external force damage to the wires located inside it.

The explosion-proof shield 50 is used to be combined with the base 10 to jointly enclose the circuit control unit 20, the water tank body 30, the first electrical conduit 401A, the second electrical conduit 401B, the buoy conduit 601, and the water outlet pipe 403 completely to provide protection. More specifically, the explosion-proof shield 50 may be formed using a high-explosion-resistant material (such as a metal plate) to have a top wall 501, a vertical wall 503 connected to one side (i.e., the front side) of the top wall 501, and two side walls 505 on opposite sides between the vertical wall 503 and the top wall 501 respectively. The top wall 501 and the vertical wall 503 are provided with holes 507 corresponding to the positions of the screw holes 109. Accordingly, screws are used to pass through these holes 507 and lock the screw holes 109 to fix the explosion-proof shield 50 to the base 10.

The usage of the explosion-proof water tank device of the present invention is described as follows: the circuit control unit 20 is electrically connected to an external power supply and is operated and controlled by remote automation equipment and/or staff. The start time is preset by a timer or manual operation. The circuit control unit 20 controls the water pump 40 to start for a predetermined time and then stop. During the time when the water pump 40 pumps, the water pump 40 pumps out the water or cleaning fluid in the water tank body 30 through the water outlet pipe 403 to deliver the water or the clean fluid to the explosion-proof camera and spray to the lens glass surface of the explosion-proof camera through a nozzle, and then the glass surface of the lens is scrubbed by a wiper provided on the explosion-proof camera. At the same time, the electronic buoy 60 detects the water level in the water tank body 30 and transmits the electronic signal to the circuit control unit 20, and then the circuit control unit 20 transmits the signal to the remote control device. When the water level is lower than a predetermined value, a predetermined signal is generated to notify staff to replenish water or cleaning fluid in time. During the foregoing operation, even if the circuit control unit 20 generates sparks due to a short circuit or other faulty factors, it will not leak out because it is shielded by the explosion-proof shield 50, and therefore will not cause a harmful explosion to the external sensitive environment.

Although the present invention has been described with reference to the preferred embodiments thereof, it is apparent to those skilled in the art that a variety of modifications and changes may be made without departing from the scope of the present invention which is intended to be defined by the appended claims.

## Claims

1. An explosion-proof water tank device, comprising:
a base;
a circuit control unit, disposed on the base;
a water tank body, disposed on the base;
a water pump, disposed inside the water tank body, connected to an electrical conduit and a water outlet pipe, and extending out of the water tank body, wherein the electrical conduit is connected to the circuit control unit, and the water outlet pipe is connected to a water outlet of the base; and
an explosion-proof shield, connected to the water outlet of the base, combined with the base to completely enclose the circuit control unit, the water tank body, the electrical conduit, and the water outlet pipe;
wherein the water outlet of the base is connected to a water pipe, and the water pump pumps the water or cleaning fluid stored in the water tank body to deliver to an explosion-proof camera and spray onto a lens surface of the explosion-proof camera.

2. The explosion-proof water tank device according to claim 1, further comprising:
an electronic buoy, disposed in the water tank body, connected to a buoy conduit and extending out of the water tank body, and the buoy conduit being connected to the circuit control unit;
wherein the buoy conduit is completely enclosed by the base and the explosion-proof shield.

3. The explosion-proof water tank device according to claim 1, wherein the base has a bottom seat, one side of the bottom seat is connected to a vertical plate, the opposite sides of the bottom seat and the vertical plate are connected to side plates, respectively, and the outlet water is disposed on the side plate.

4. The explosion-proof water tank device according to claim 1, wherein the water tank body is made of metal or plastic.
